Europäisches Patentamt

(19) European Patent Office

Office européen des brevets

(11) Numéro de publication : **0 255 792 B1**

## FASCICULE DE BREVET EUROPEEN

(12)

(45) Date de publication du fascicule du brevet :
05.06.91 Bulletin 91/23

(51) Int. Cl.⁵ : **G01S 17/74,** G01S 17/06

(21) Numéro de dépôt : **87401756.9**

(22) Date de dépôt : **28.07.87**

(54) Système de repérage utilisant un ensemble rétroréflecteur, et modulateur d'un faisceau laser.

(30) Priorité : **01.08.86 FR 8611201**

(43) Date de publication de la demande :
**10.02.88 Bulletin 88/06**

(45) Mention de la délivrance du brevet :
**05.06.91 Bulletin 91/23**

(84) Etats contractants désignés :
**DE GB**

(56) Documents cités :
**EP-A- 0 173 617**
**FR-A- 2 378 404**
**FR-A- 2 500 933**
**US-A- 4 143 263**

(73) Titulaire : **THOMSON-CSF**
**51, Esplanade du Général de Gaulle**
**F-92800 Puteaux (FR)**

(72) Inventeur : **Meyzonnette, Jean-Louis**
**THOMSON-CSF SCPI 19, avenue de Messine**
**F-75008 Paris (FR)**
Inventeur : **Pressiat, Robert**
**THOMSON-CSF SCPI 19, avenue de Messine**
**F-75008 Paris (FR)**
Inventeur : **Remy, Bertrand**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

Jouve, 18, rue Saint-Denis, 75001 PARIS

## Description

La présente invention concerne un système de repérage utilisant un ensemble rétroréflecteur et modulateur d'un faisceau laser. Le repérage est fonction de l'utilisation envisagée pour le système, il peut s'agir de la mesure d'orientation du faisceau laser par rapport à une direction de référence liée à un objet illuminé, ou encore de l'identification de l'objet illuminé.

Il est connu d'utiliser en coopération des moyens d'émission laser qui illuminent à distance un ensemble qui procure des fonctions de modulation et de rétroréflexion.

Une solution de ce genre est décrite dans le brevet français 2 378 404 plus particulièrement axé sur la réalisation d'un répondeur dans un système d'identification ami-ennemi. Suivant ces réalisations, un élément modulateur optoélectrique, tel un filtre optique interférentiel accordable ou un commutateur électro-optique PLZT, est associé à un miroir pour produire les fonctions désirées. Dans ces réalisations, cette partie ré-émettrice est combinée avec un récepteur destiné lui-même à identifier l'onde laser reçue qui est déjà codée.

Suivant une autre solution connue décrite dans le brevet français 2 433 760 un objet illuminé par l'onde laser comporte des ensembles rétroréflecteurs et modulateurs associant une céramique PLZT avec un dispositif catadioptre, tel un coin de cube réflecteur. L'utilisation envisagée est plus particulièrement la détection et la localisation d'objet et le repérage spatial de directions liées à l'objet.

Le but de l'invention est de proposer une autre solution pour la rétroréflexion de la modulation du faisceau laser et qui, par les paramètres mis en jeu, peut être utilisée dans diverses applications.

Suivant l'invention, il est proposé de réaliser un système de repérage utilisant un dispositif rétroréflecteur et modulateur d'un faisceau laser comportant, un émetteur-récepteur laser découplé mécaniquement et situé à distance d'un ensemble rétroréflecteur et modulateur, l'émetteur produisant un rayonnement en direction dudit ensemble, le récepteur comportant des circuits de détection et de traitement du rayonnement laser modulé et renvoyé par rétroréflexion. L'ensemble rétroréflecteur et modulateur comporte un déflecteur acousto-optique qui reçoit périodiquement d'un circuit de commande un signal électrique de fréquence réglable pour obtenir la diffraction du faisceau dans les conditions opérationnelles de Bragg, le déflecteur étant couplé mécaniquement avec un dispositif catadioptre disposé en aval pour renvoyer selon la même direction le rayonnement laser diffracté et produire après traversée inverse du déflecteur la rétroréflexion du faiscau vers l'émetteur-récepteur, l'onde rétroréfléchie comportant un glissement de fréquence de valeur égale à deux fois la fréquence dudit signal de commande.

Les particularités et avantages de l'invention apparaîtront dans la description qui suit donnée à titre d'exemple à l'aide des figures annexées qui représentent :

– Fig. 1, un schéma d'un système de repérage conforme à l'invention ;

– Fig. 2, un schéma partiel représentant l'ensemble de modulation et de rétroréflexion du faisceau laser ;

– Figs. 3A et 3B, des formes d'ondes de signaux de commande du déflecteur ;

– Fig. 4, un schéma du dispositif déflecteur optique aménagé avec un dispositif de balayage optique pour couvrir un champ plus large ;

– Fig. 5, un schéma de la réalisation selon la figure 3 avec des circuits mécaniques et électroniques d'asservissement du déflecteur optique au mouvement d'exploration du balayage ;

– Fig. 6, un schéma partiel de la tête optique de balayage aménagée pour permettre une exploration spatiale par rotation autour de deux axes orthogonaux ;

– Fig. 7, un schéma relatif au déflecteur acousto-optique montrant la fenêtre d'entrée ;

– Fig. 8, un schéma d'un balayage de champ ligne par ligne possible pour une réalisation selon la figure 6 ;

– Fig. 9, une variante de réalisation du dispositif catadioptre placé à l'arrière du déflecteur acousto-optique;

– Figs. 10A et 10B, des formes d'onde de signaux de commande du déflecteur et des signaux détectés correspondants ;

– Fig. 11, une variante de réalisation utilisant deux déflecteurs acousto-optiques.

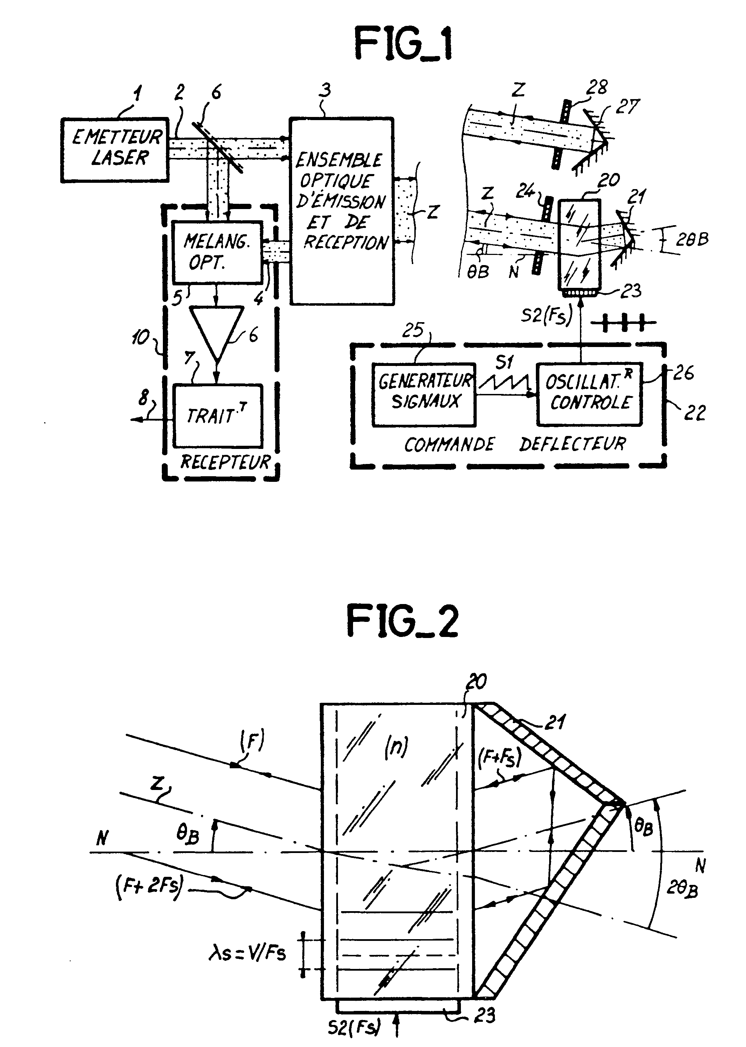

En se reportant au schéma de la figure 1 le système comporte un ensemble émetteur-récepteur avec un émetteur laser 1 qui procure un faisceau d'émission 2 qui est transmis à travers une optique de sortie 3 représentant l'ensemble optique d'émission du faisceau laser et de réception des ondes laser rétrodiffusées par les objets illuminés. L'onde reçue 4 est appliquée à un mélangeur optique 5 du dispositif récepteur 10 qui reçoit par ailleurs une onde locale à la fréquence laser d'émission, cette onde pouvant être produite comme indiqué à l'aide d'une glace semi-réfléchissante 6 permettant de prélever une fraction de l'émission laser 2. Le mélangeur optique 5 délivre sous forme d'un signal électrique le battement correspondant qui après amplification en 6 est appliqué à des circuits de traitement 7. Les circuits de traitement délivrent en 8 l'information destinée à l'exploitation. Cet ensemble émetteur-récepteur laser peut, par exemple, être installé à bord d'un avion alors que la partie restante du système indiqué à droite de la figure 1 est disposée au sol, pour une application envisagée de l'invention. Cette partie au sol comporte un ensemble de modulation et de rétroréflexion de l'onde laser émise lui parvenant. La modulation est obtenue avec un déflecteur acousto-optique 20 qui est commandé électriquement par un signal S2 dont la fréquence réglable permet d'obtenir pour une valeur $F_S$ les conditions opérationnelles de diffraction de Bragg suivant lesquelles, le rayonnement incident est diffracté par le déflecteur et se retrouve quasi-intégralement en sortie. En complément, un dispositif catadioptre 21 disposé en aval du déflecteur 20, un coin de cube réflecteur par exemple permet le renvoi par rétroréflection du rayonnement selon la direction Z du trajet initial. Le rayonnement diffracté traverse à nouveau le déflecteur 20 dans les mêmes conditions opérationnelles et est renvoyé selon sa direction originale vers l'ensemble émetteur-récepteur. La partie 22 représente les circuits de commande du déflecteur pour produire le signal S2 appliqué à un élément piézo-électrique 23. Cet élément 23 produit à la fréquence $F_S$ du signal de commande S2 des vibrations acoustiques qui sont transmises dans le milieu optique photo-élastique du déflecteur 20. Les circuits de commande du déflecteur 20 peuvent comporter, comme représenté, un générateur 25 de signaux en dents de scie S1 qui sont appliqués à un oscillateur 26 contrôlé par tension et qui délivre le signal S2.

La figure 2 rappelle le fonctionnement de déflecteur et montre ce fonctionnement avec le catadioptre associé lorsque les conditions de diffraction de Bragg sont présentes. La déflection acousto-optique est basée sur la propagation d'une onde acoustique dans un milieu refringent. Cette propagation se traduit sur l'indice optique de ce milieu par une perturbation ondulatoire synchrone dont l'origine se trouve dans la modulation apportée à la densité locale de matière par la distribution locale des pressions (effet Brillouin).

La figure 2 représente le phénomène d'interaction de l'onde plane lumineuse laser incidente et d'une onde plane acoustique sinusoïdale progressive dans le milieu photo-élastique 20. Ce milieu se comporte comme un réseau optique et a la propriété sous certaines conditions de diffracter l'onde lumineuse. Pour ces conditions, dites conditions de diffraction de Bragg, il n'existe qu'un faisceau diffracté en sortie. A une onde progressive de fréquence $F_S$ correspond du point de vue optique un réseau de phase dont le pas est égal à $V/F_S$, V étant la vitesse de propagation acoustique dans le milieu formant le déflecteur 20. Pour la valeur $F_S$ correspondant à la diffraction de Bragg on a la relation :

$$\sin \theta_B = \lambda\, F_S/2V$$

dans laquelle $\theta_B$ est le décalage angulaire entre l'axe du faisceau laser incident et la normale au déflecteur, $\lambda$ la longueur d'onde de rayonnement laser et V la vitesse de propagation acoustique dans le milieu optique photoélastique.

La fréquence F du faisceau laser est modifiée une première fois d'un accroissement de fréquence $F_S$ après diffraction dans le milieu 20, puis au retour, après rétroréflexion par l'élément 21 et nouvelle traversée selon le même trajet inversé du milieu 20, elle subit encore un accroissement $F_S$. Par conséquent, il suffit à la réception de mesurer le décalage de fréquence $2\,F_S$ entre le faisceau émis et le faisceau reçu pour en déduire selon la formule précitée le dépointage θB présenté par l'axe du faisceau vis-à-vis de la direction de référence N normale au déflecteur.

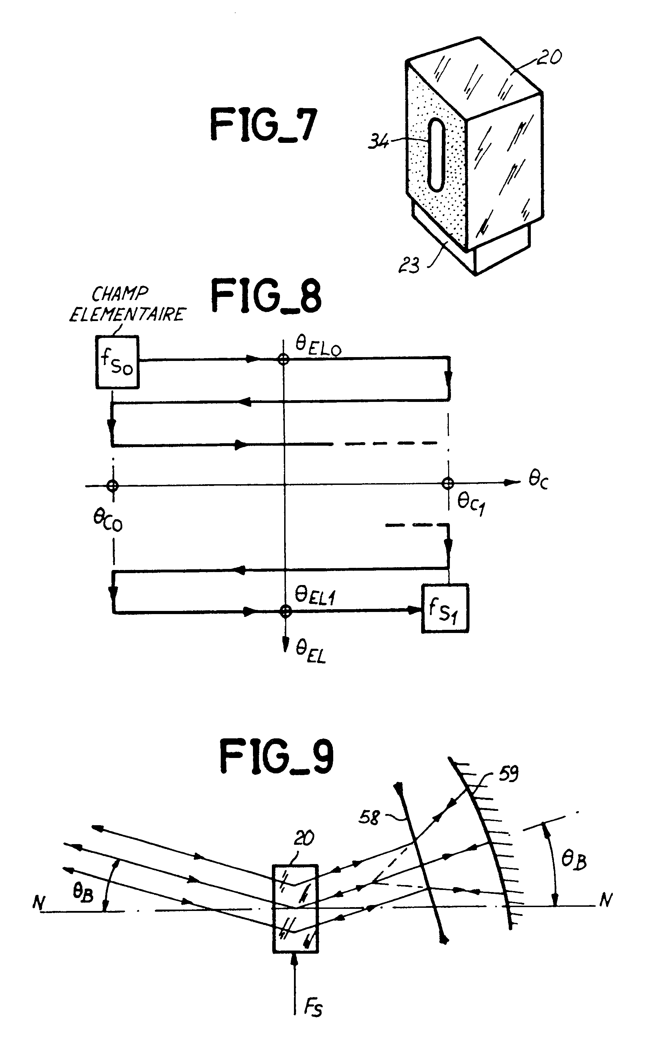

La réalisation figure 1 permet une couverture petit champ. L'émetteur-récepteur peut être porté par un mobile, l'émetteur délivrant un faisceau laser, par exemple en infrarouge à 10, 6 microns, et on désire connaître la direction de ce faisceau par rapport à la normale N. Le faisceau laser de fréquence F subit, du fait de mouvement relatif par rapport au système déflecteur et rétroréflecteur disposé au sol une dérive Doppler dont il y a lieu de tenir compte. Un deuxième dispositif catadioptre 27, disposé comme le premier 21, est prévu pour renvoyer le faisceau laser par rétroréflexion selon la direction Z également sans autre modification, en sorte de fournir une référence et obtenir à la réception l'altération due à la seule dérive Doppler. Les éléments 24 et 28 correspondent à des diaphragmes ; en particulier le diaphragme 24 est adapté à la forme de la fenêtre d'entrée 34 du déflecteur 20 (fig. 7).

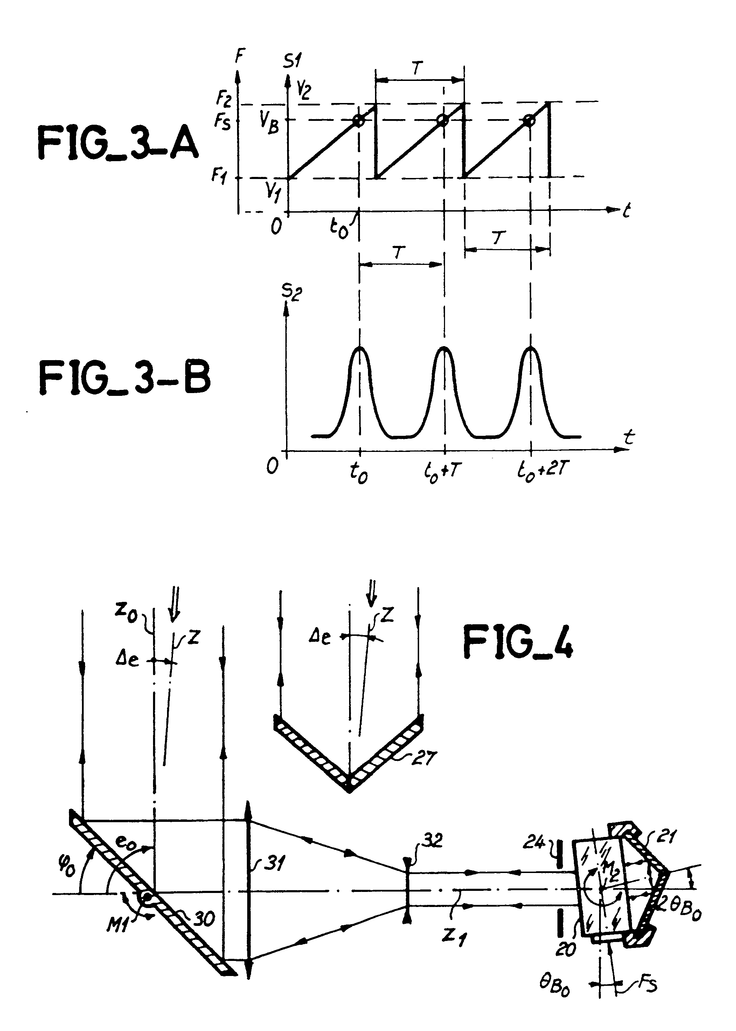

Suivant la réalisation des circuits de commande 22 de la figure 1, le déflecteur est excité périodiquement à une fréquence $F_S$ selon la courbe S2 représentée sur la figure 3B, la figure 3A représentant les dents de scie formant le signal S1 de commande de l'oscillateur 26 et l'excursion de fréquence F1 à F2 de période T. La valeur VB de S1 correspond à l'émission de la fréquence $F_S$ satisfaisant aux conditions de Bragg et cette valeur se trouve reproduite à la période T. La comparaison des faisceaux renvoyés par le dispositif 27 d'une part, et l'ensemble 20-21 d'autre part, permet d'éliminer le paramètre Doppler et de sélectionner par différence la valeur $2\,F_S$ due au montage 20-21. Cette comparaison de fréquence s'effectue dans le récepteur 10 après mélange en 5 et analyse des ondes de battement par le circuit de traitement 7 en utilisant un analyseur de spectre.

La solution figure 1 est applicable à la mesure, à bord d'un aéronef, de l'angle de la direction aéronef-entrée de piste et du plan horizontal. Le dispositif modulateur et rétroréflecteur 20-21 et le dispositif rétroréflecteur 27 sont disposés au point théorique de toucher de roue sur la piste, la normale N au déflecteur étant à l'intersection du plan horizontal et du plan vertical contenant l'axe de la piste. La plage de mesure disponible est faible, de 1 à 5 degrés environ, mais suffisante pour ce genre d'application. Par contre, pour avoir une mesure dans un champ angulaire plus important, il faut envisager une réalisation modifiée décrite à l'aide des figures suivantes.

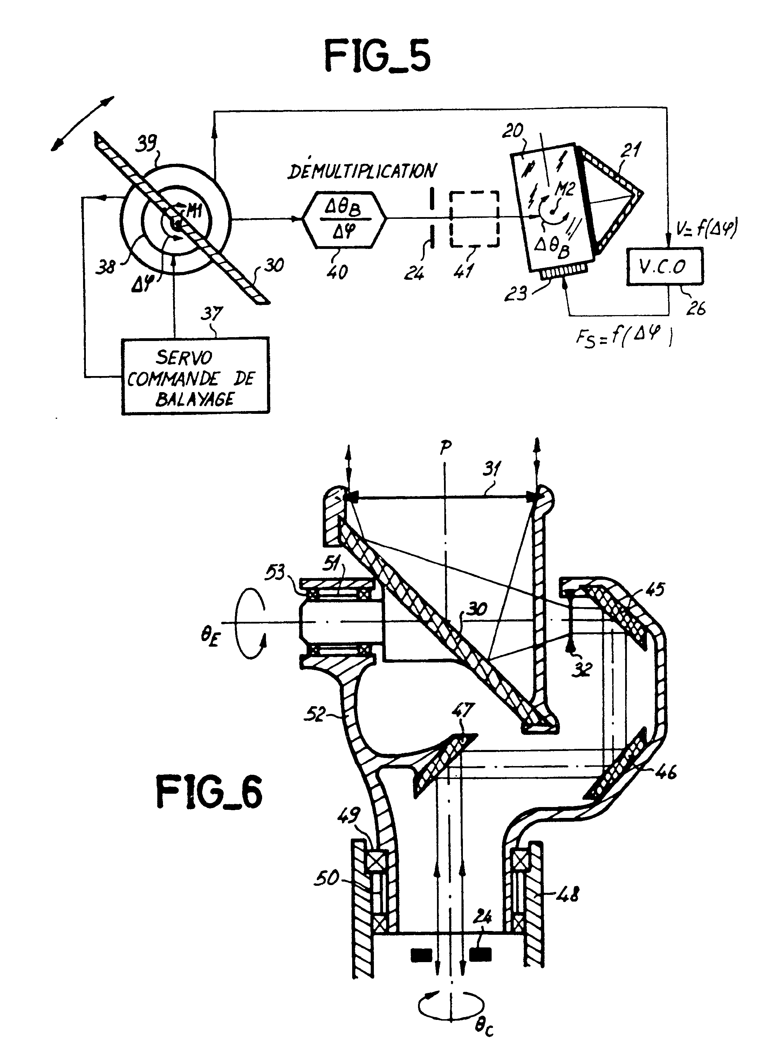

Dans la réalisation figure 4 on considère un balayage dans le plan de figure qui représente, par exemple, une excursion angulaire en gisement. Le dispositif de balayage est constitué à l'aide d'un miroir réfléchissant 30 qui tourne autour d'un axe central perpendiculaire au plan de figure représenté par sa trace M1. Une optique afocale 31-32 permet d'adapter le diamètre du flux d'entrée à la fenêtre d'entrée du déflecteur optique 20. La figure 7 montre un déflecteur optique avec la fenêtre d'entrée 34, la partie restante de la surface d'entrée étant rendue opaque. La lentille 31 pourra être placée en amont du miroir 30 et tourner avec celui-ci. L'optique afocale 31-32 limite le champ d'entrée du milieu photoélastique 20 de façon que, dès que le faisceau entrant provenant de l'émetteur-récepteur laser s'écarte de l'axe optique P d'un angle limite déterminé de faible valeur, ce faisceau ne pénètre plus par le diaphragme d'entrée 24. En effet, l'écart angulaire à l'entrée se trouve multiplié par le montage afocal dans le rapport de grossissement de l'afocal formé par les lentilles 31 et 32, et au niveau du milieu photoélastique par la distance séparant la lentille 32 du plan d'entrée du milieu 20. La direction $Z_0$ correspond à la direction de renvoi de l'axe optique $Z_1$ du montage afocal 31-32. Si l'on fait tourner le miroir 30 autour du point M1 d'un angle $\Delta\varphi$, la direction visée sera la direction Z qui s'écarte d'un angle $\Delta e = 2\Delta\varphi$ de la direction $Z_0$ initiale. Pour chaque valeur d'écart $\Delta\varphi$ on fait correspondre une valeur de la fréquence $F_S$ du transducteur piézoélectrique et l'on fait tourner le milieu photoélastique 20 autour d'un axe M2 parallèle à l'axe M1 et situé au centre du milieu, de telle sorte que le faisceau optique entre la lentille 32 et le milieu 20 respecte toujours les conditions de diffraction de Bragg. La rotation $\theta_{Bo}$ du milieu 20 permet de vérifier la relation :

$$\sin\theta_{Bo} = \lambda\, F_S/2V$$

Dans ces conditions, un mobile possédant un émetteur-récepteur laser peut connaître l'angle $\Delta e$ que fait son pinceau d'émission par rapport au plan nominal passant par la direction $Z_0$ et perpendiculaire au plan de figure, en mesurant après réception du faisceau laser rétroréflechi la dérive de fréquence $2F_S$ comme il a été indiqué précédemment. On peut choisir, par exemple, une loi simple telle que $\Delta F = K\Delta e$, K étant un coefficient de proportionnalité avec $F_S = F_0 + \Delta F$, $F_0$ étant la valeur de fréquence initiale pour le pinceau nominal représenté sur la figure. Le rapport $\Delta\theta B/\Delta\phi$ de la transmission qui doit lier la rotation du milieu photoélastique 20 autour de l'axe M2 et la rotation du miroir 30 autour de l'axe M1 est donné par la relation :

$$\frac{\Delta\theta_B}{\Delta\varphi} = \frac{\lambda}{V}\cdot\frac{K}{\sqrt{1-(\lambda F_o/2V)^2}}$$

Le traitement 7 à la réception permet d'extraire la valeur $\Delta e = (F_S - F_0)/K$ après avoir obtenu $2F_S$. Le faisceau laser émis à distance, lorsqu'il parvient suivant le faisceau nominal $Z_1$ et seulement dans ce cas est renvoyé par le milieu photoélastique 20 et son rétroréflecteur associé 21 grâce à la rotation de cet ensemble autour de l'axe M2 tel que définie par la relation précédente.

La réalisation de cette solution est schématisée pour la partie électronique de la figure 5. L'asservissement du balayage comporte un circuit de servocommande 37 qui alimente un moteur 38 monté sur l'axe M1. La rotation entraîne également un capteur angulaire 39 qui fournit l'information de rotation au servomécanisme 37, ainsi qu'à l'oscillateur contrôlé 26. La rotation du miroir est modifiée dans le rapport $\Delta\theta_B/\Delta\varphi$ précité à l'aide d'un démultiplicateur mécanique ou électronique 40. On obtient ainsi la rotation $\Delta\theta_B$ de l'ensemble 20-21 autour de l'axe M2 correspondant à la rotation $\Delta\varphi$ du miroir et la commande de l'oscillateur 26 est telle que la fréquence $F_S$ est modifiée pour respecter les conditions du Bragg au fur et à mesure de la rotation. Durant une phase de balayage et de recherche le miroir produit une excursion dans une secteur angulaire d'amplitude déterminé. Cette commande peut s'effectuer à vitesse constante et peut être obtenue par une programmation du servomécanisme 37.

On remarque qu'au lieu de faire tourner le milieu photoélastique 29 et son rétroréflecteur 21, on peut faire dévier le faisceau de la valeur $\Delta\theta_B$, par un déviateur optique quelconque, un miroir ou un diasporamétre, interposé entre le diaphragme 24 et l'entrée du déflecteur 20. Ce déviateur est symbolisé par le bloc 41 en pointillé.

La fenêtre d'entrée 34 (fig. 7) du milieu photoélastique 20 est généralement rectangulaire et il est possible de prévoir une optique afocale cylindro-sphérique.

La solution grand champ décrite à l'aide des figures 4 et 5 est relative à la mesure d'un angle dans un plan. Pour étendre cette solution à la mesure d'une direction dans l'espace il faut rajouter à l'excursion en gisement une rotation suivant un deuxième axe perpendiculaire, celui du site. A cet effet, la tête de balayage peut être réalisée selon la solution figure 6 indiquée à titre d'exemple. L'exploration dans l'espace s'effectue suivant les deux degrés de liberté d'axe $\theta_C$ entraînant tout l'équipage en gisement et celui d'axe $\theta_E$ entraînant le miroir 30 et la lentille 31 du montage afocal. L'axe d'entrée P se trouve envoyé suivant la direction d'axe optique de la lentille 32 et un ensemble de trois miroirs 45, 46, 47 permet le renvoi final de cette direction suivant l'axe de rotation $\theta_C$ en gisement. Le montage est découplé d'un bâti 48 au moyen de roulements 49. L'entraînement en gisement ou circulaire est effectué par un moteur couple 50 de faibles dimensions. De même en site ou en élévation l'entraînement s'effectue par un moteur couple 51 et le découplage par rapport au cadre 52 qui supporte l'ensemble est effectué par des roulements 53. Avec les moteurs couples sont associés également des capteurs de la rotation angulaire.

Il faut définir une loi de correspondance entre la fréquence $F_S$ appliquée au déflecteur 20 et le couple de valeurs angulaires de rotation, $\theta_C$ en gisement et $\theta_E$ en site. Par exemple, on peut considérer une loi simple, linéaire, de croissance de la fréquence $F_S$ d'une valeur $F_{S0}$ initiale à une valeur $F_{S1}$ finale. En considérant un balayage du type ligne par ligne en gisement avec excursion progressive en site rappelé sur la figure 8, il est aisé à partir des détections d'angle $\theta_E$ et $\theta_C$ grâce aux capteurs montés respectivement sur l'axe d'élévation et sur l'axe de circulaire, de commander convenablement l'oscillateur contrôlé 26 par la valeur de fréquence $F_S$ donnée par la relation :

$$F_S = F_{S0} + (F_{S1} - F_{S0}) \cdot \frac{N}{N+1} \cdot \left( \frac{\theta_{E_L} - \theta_{E_{LO}}}{\theta_{E_{L1}} - \theta_{E_{LO}}} + \frac{R}{N} \right)$$

où N représente le nombre de lignes en comptant ces lignes 0, 1, 2,.....N., et R est égal à

$$\frac{\theta_C - \theta_{CO}}{\theta_{C1} - \theta_{CO}}$$

dans le cas de lignes paires 0, 2,....N et à

$$\frac{\theta_{C1} - \theta_C}{\theta_{C1} - \theta_{CO}}$$

dans le cas de lignes impaires 1, 3,....N-1.

La figure 9 représente une variante de réalisation du dispositif catadioptre en aval du modulateur 20. Suivant cette solution le catadioptre est constitué au moyen d'une lentille divergente 58 et d'un miroir sphérique 59 dont le centre de courbure coïncide avec le foyer de la lentille. L'ensemble 58 et 59 est comme précédemment solidaire du modulateur 20 dans les solutions figures 4 à 6 où l'ensemble est entraîné en rotation.

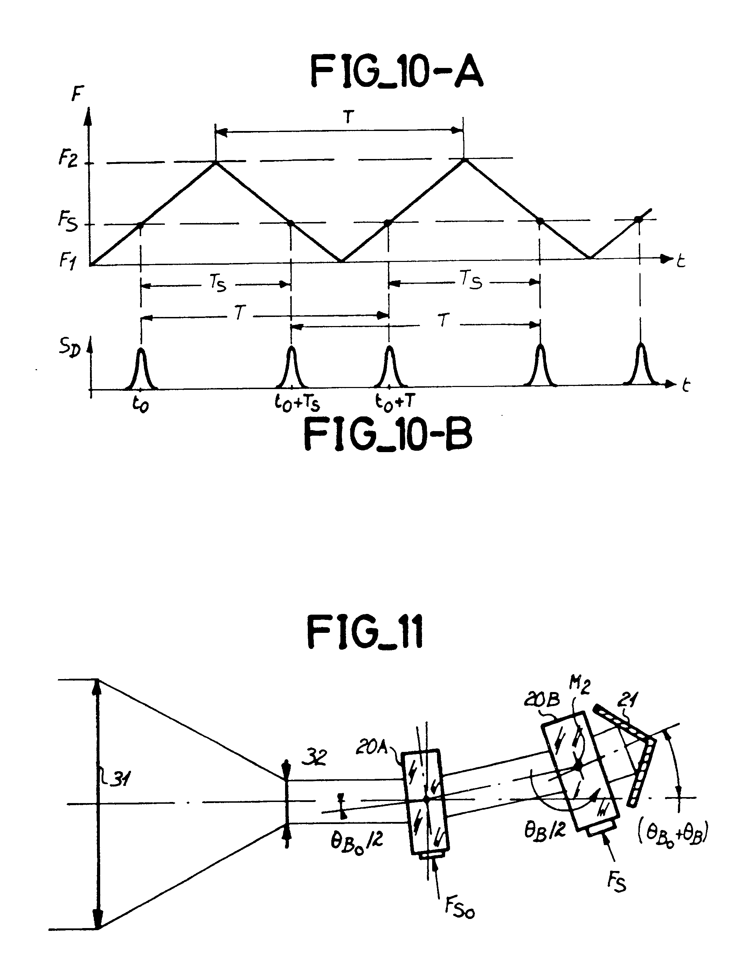

La figure 10 représente une variante de commande de l'oscillateur contrôlé selon des formes d'onde en dents de scie symétriques (Fig. 10A), l'excursion de fréquence se faisant linéairement de la valeur F1 à la valeur F2 lors d'une durée T/2 et de la valeur F2 revenant à la valeur F1 lors d'une deuxième demi-période T/2. Le signal détecté SD (Fig. 10B) lors du traitement à la réception comporte la fréquence $F_S$ avec un intervalle TS qui est significatif de la valeur $F_S$. Les deux signaux successifs détectés correspondants sont reproduits chacun à la période T. La mesure du temps TS, ou mieux du rapport TS/T, à la réception permet d'identifier la valeur $F_S$ et en conséquence le dispositif peut être simplifié en supprimant le dispositif rétroréflecteur de référence représenté en 27-28 sur la figure 1.

La figure 11 a trait à une autre variante qui peut être mise en oeuvre si le champ exploré est tel, dans une version d'utilisation à champ large, que la fenêtre 34 du déflecteur est de dimension trop limitée suivant le sens de sa plus grande longueur pour permettre le fonctionnement satisfaisant dans les conditions de Bragg en extrémités du champ d'observation. Il est proposé, selon cette solution, d'utiliser un groupe de deux déflecteurs successifs, le premier 20A sans rétroréflecteur associé et qui est alimenté par un signal de fréquence $F_{S0}$ fixe, donnant les conditions de Bragg pour un angle $\theta_{B0}$ indiqué et le deuxième qui est alimenté par la valeur $F_S$ variable en fonction de la rotation de l'axe d'entrée lors du balayage. La direction de sortie représente la somme $\theta_{B0}$ due au premier montage 20A et $\theta_B$ due au deuxième montage 20B, $\theta_{B0}$ étant une valeur constante. Le dispositif de réception à distance doit tenir compte des décalages de fréquence $2F_{S0}$ et $2F_S$ pour interpréter convenablement la mesure.

Un dispositif conforme à l'invention est applicable à l'identification ami-ennemi, l'ensemble d'émission-réception laser étant disposé au sol et l'ensemble modulateur-rétroréflecteur sur l'avion ami à identifier. Une tourelle selon la figure 6 peut être montée sur l'avion ami et pointée par une commande annexe vers l'équipement émetteur-récepteur. De même au sol une tourelle peut être prévue pour orienter l'émetteur-récepteur vers l'avion ami détecté par un système annexe, un radar par exemple. Le dispositif modulateur 20 est orienté de façon que sa normale N soit orientée à $\theta_{B0}$ par rapport à l'axe optique pour obtenir la relation de Bragg déjà citée. L'angle $\theta_{B0}$ peut être modifié ainsi que la fréquence $F_S$ selon le code en vigueur. Pour cela un servomécanisme de position oriente le dispositif 20 à l'angle désiré et un détecteur angulaire contrôle cette rotation et envoie l'information angulaire également à l'oscillateur contrôlé qui délivre la fréquence d'excitation $F_S$. Ainsi, l'avion ami ayant pointé son dispositif acousto-optique vers l'émetteur-récepteur au sol celui-ci étant également pointé sur l'avion, le sol émet un faisceau laser à la fréquence F et reçoit en retour un faisceau à la fréquence F augmentée de la dérive Doppler et de l'accroissement $F_S$, ce dernier étant mesuré et comparé au code en vigueur.

## Revendications

1. Système de repérage utilisant un dispositif réflecteur et modulateur d'un faisceau laser comportant, un émetteur-récepteur laser découplé mécaniquement et situé à distance d'un ensemble rétroréflecteur et modulateur, l'émetteur produisant un rayonnement en direction de l'ensemble rétroréflecteur et modulateur, le récepteur comportant des circuits de détection et de traitement du rayonnement laser modulé et renvoyé par rétroréflexion, caractérisé en ce que ledit ensemble comporte un déflecteur acousto-optique (20) qui reçoit périodiquement d'un circuit de commande (22) un signal électrique (S2) de fréquence réglable ($F_S$) pour obtenir la diffraction du faisceau dans les conditions opérationnelles de Bragg, le déflecteur étant couplé mécaniquement avec un dispositif catadioptre (21) disposé en aval pour renvoyer selon la même direction le rayonnement laser diffracté et produire, après traversée inverse du déflecteur, la rétroréflexion du faisceau vers l'émetteur-récepteur, l'onde rétroréfléchie comportant un glissement de fréquence de valeur égale à deux fois ($2F_S$) la fréquence dudit signal de commande.

2. Système selon la revendication 1, caractérisé en ce qu'il comporte, en amont du dispositif déflecteur optique (20) un dispositif de balayage optique (30) pour explorer un champ d'étendue déterminée.

3. Système selon la revendication 2, caractérisé en ce que le dispositif de balayage assure l'exploration angulaire dans un plan et comporte un miroir réfléchissant (30) tournant autour d'un axe orthogonal au plan exploré.

4. Système selon la revendication 3, caractérisé en ce que l'ensemble rétroréflecteur et modulateur (20-21) est asservi, selon une loi déterminée, à la rotation du miroir (30) pour préserver les conditions de diffraction de Bragg.

5. Système selon la revendication 4, caractérisé en ce que le miroir (30) est entraîné par un asservissement de position (37, 38, 39), la rotation angulaire détectée étant transmise à un oscillateur contrôlé (26) qui délivre ledit signal de commande (S2) du déflecteur (20), la rotation du miroir étant démulptipliée dans un dispositif (40) dans un rapport fonction de ladite loi d'asservissement pour entraîner l'ensemble modulateur et rétroréflecteur.

6. Système selon la revendication 3, caractérisé en ce qu'un dispositif déviateur optique asservi selon une loi déterminée à la rotation du miroir (30) est disposé à l'entrée du déflecteur (20) pour faire dévier le rayonnement et préserver les conditions de diffraction de Bragg.

7. Système selon la revendication 6, caractérisé en ce que le miroir est entraîné par un asservissement de position (37, 38, 39), la rotation angulaire détectée par un capteur (39) étant transmise à un oscillateur contrôlé (26) qui délivre ledit signal de commande (S2) du déflecteur (20), la rotation du miroir étant démultipliée dans un dispositif (40) dans un rapport fonction de ladite voie d'asservissement pour entraîner ledit déviateur optique (41).

8. Système selon l'une quelconque des revendications 2 à 5, caractérisé en ce que le dispositif de balayage est constitué par une tourelle à deux degrés de liberté pour assurer une exploration spatiale par des rotations ($\theta_C$), et $\theta_E$) autour de deux axes orthogonaux correspondant respectivement à un axe de circulaire et un axe d'élévation.

9. Système selon la revendication 8, caractérisé en ce que la fréquence (FS) appliquée au déflecteur est liée par une loi déterminée au couple de valeurs angulaires de rotation ($\theta_C$, $\theta_E$), ledit circuit de commande (22) élaborant le signal à la fréquence correspondante en fonction des valeurs angulaires de rotation détectées.

10. Système selon l'une quelconque des revendications précédentes, caractérisé en ce que le dispositif catadioptre est par un coin de cube réflecteur (21).

6

11. Système selon l'une quelconque des revendications 1 à 9, caractérisé en ce que le dispositif catadioptre est réalisé au moyen d'une lentille divergente (58) et d'un miroir sphérique (59).

12. Système selon l'une quelconque des revendications précédentes, caractérisé en ce qu'il comporte en amont du déflecteur (20B) un autre dispositif déflecteur acousto-optique (20A) lequel est commandé à fréquence fixe ($F_{S0}$) pour accroître le champ couvert.

13. Système selon l'une quelconque des revendications précédentes, caractérisé en ce que le circuit de commande (22) du déflecteur (20, 23) comporte un générateur de signaux en dents de scie (25) dont la sortie commande un oscillateur contrôlé (26), lequel produit le signal de commande du déflecteur appliqué à celui-ci par l'intermédiaire d'un élément piézoélectrique (23).

14. Système selon l'une quelconque des revendications précédentes, caractérisé en ce que l'émetteur-récepteur laser est porté par une première structure et l'ensemble rétroréflecteur et modulateur par une deuxième structure, l'une au moins des deux structures étant mobile par rapport à l'autre, le système comportant en outre un deuxième dispositif catadioptre 27 pour renvoyer une partie du rayonnement laser par rétroréflexion, sans moduler ce rayonnement ,en sorte d'obtenir une référence d'évaluation du glissement de fréquence Doppler dû au mouvement relatif desdites structures.

15. Système selon l'une quelconque des revendications précédentes, caractérisé en ce que le récepteur (10) comporte un circuit mélangeur optique pour produire le battement de l'onde laser d'émission avec l'onde laser reçue par rétroréflexion et un circuit de traitement (37) avec un analyseur de spectre pour effectuer l'extraction du glissement de fréquence ($2F_S$) égal à deux fois la fréquence du signal de commande du déflecteur et pour en déduire, par le calcul, la déviation ($\theta_B$) présentée par l'axe du faisceau laser par rapport à la normale (N) au déflecteur acousto-optique (20).

16. Système selon la revendication 15, caractérisé en ce que le récepteur (10) produit l'extraction de la valeur ($2F_S$) de glissement de la fréquence du faisceau laser reçu, cette extraction étant obtenue par mesure temporelle en commandant l'oscillateur par un signal en forme de dent de scie symétrique périodique.


## Ansprüche

1. Ortungssystem, das eine Laserstrahlreflektor- und - modulatorvorrichtung verwendet, mit einem Lasersender/Laserempfänger, der von einer Retroreflektor- und Modulatoranordnung mechanisch entkoppelt ist und sich von dieser Anordnung in einem Abstand befindet, wobei der Sender eine Strahlung in Richtung der Retroreflektor- und Modulatoranordnung erzeugt und wobei der Empfänger Schaltungen zur Erfassung und zur Bearbeitung der modulierten und durch Retroreflexion zurückgestrahlten Laserstrahlung aufweist, dadurch gekennzeichnet, daß die Anordnung eine akustooptische Ablenkeinrichtung (20) aufweist, die periodisch von einer Steuerschaltung (22) ein elektrisches Signal (S2) mit einer Frequenz ($F_S$), die so einstellbar ist, daß die Bragg-Strahlstreuungsbetriebsbedingungen erhalten werden können, empfängt, wobei die Ablenkeinrichtung mit einer nachgeordneten katadioptrischen Vorrichtung (21) mechanisch gekoppelt ist, um die gestreute Laserstrahlung in die gleiche Richtung zurückzustrahlen und um nach dem Durchgang durch die Ablenkeinrichtung in Gegenrichtung die Retroreflexion des Strahls zum Sender/Empfänger zu erzeugen, wobei die retroreflektierte Welle eine Frequenzverschiebung um einen Wert aufweist, der gleich dem zweifachen ($2F_S$) der Frequenz des Steuersignals ist.

2. System gemäß Anspruch 1, dadurch gekennzeichnet, daß es vor der optischen Ablenkeinrichtung (20) eine optische Abtasteinrichtung (30) für die Abtastung eines Feldes mit bestimmter Ausdehnung aufweist.

3. System gemäß Anspruch 2, dadurch gekennzeichnet, daß die Abtasteinrichtung die Winkelabtastung in einer Ebene gewährleistet und einen um eine zur abgetasteten Ebene senkrechte Achse drehbaren reflektierenden Spiegel (30) aufweist.

4. System gemäß Anspruch 3, dadurch gekennzeichnet, daß die Retroreflektor- und Modulatoranordnung (20-21) entsprechend der Drehung des Spiegels (30) nach einem vorgegebenen Gesetz gesteuert wird, um die Bragg-Streuungsbedingungen aufrechtzuerhalten.

5. System gemäß Anspruch 4, dadurch gekennzeichnet, daß der Spiegel (30) durch eine Nachlaufsteuerung (37, 38, 39) angetrieben wird, wobei die erfaßte Winkeldrehung an einen gesteuerten Oszillator (26) übertragen wird, der das Steuersignal (S2) der Ablenkeinrichtung (20) liefert, wobei die Drehung des Spiegels in einer Vorrichtung (40) gemäß einer Beziehung untersetzt wird, die vom Steuerungsgesetz zum Antreiben der Modulator- und Retroreflektoranordnung abhängt.

6. System gemäß Anspruch 3, dadurch gekennzeichnet, daß am Eingang der Ablenkeinrichtung (20) eine optische Ablenkeinrichtung angeordnet ist, die nach einem vorgegebenen Gesetz entsprechend der Drehung des Spiegels (30) gesteuert wird, um die Strahlung abzulenken und die Bragg-Streuungsbedingungen aufrechtzuerhalten.

7. System gemäß Anspruch 6, dadurch gekennzeichnet, daß der Spiegel durch eine Nachlaufsteuerung (37, 38, 39) angetrieben wird, wobei die durch einen Meßwertaufnehmer (39) erfaßte Winkeldrehung an einen gesteuerten Oszillator (26) übertragen wird, der das Steuersignal (S2) der Ablenkeinrichtung (20) ausgibt, wobei die Drehung des Spiegel in einer Vorrichtung (40) gemäß einer vom Steuerungsgesetz abhängigen Beziehung untersetzt wird, um die optische Ablenkeinrichtung (41) anzutreiben.

8. System gemäß einem der Ansprüche 2 bis 5, dadurch gekennzeichnet, daß die Abtastvorrichtung von einem Revolverkopf mit zwei Freiheitsgraden gebildet wird, um durch Drehungen ($\theta_C$, und $\theta_E$) um zwei zueinander senkrechte Achsen, die einer Kreiselachse bzw. einer Hubachse entsprechen, eine räumliche Abtastung zu gewährleisten.

9. System gemäß Anspruch 8, dadurch gekennzeichnet, daß die an die Ablenkeinrichtung angelegte Frequenz ($F_S$) über ein vorgegebenes Gesetz mit dem Wertepaar der Drehwinkel ($\theta_C$, $\theta_E$) verbunden ist, wobei die Steuerschaltung (22) dem Signal in Abhängigkeit von den Winkelwerten der erfaßten Drehung die entsprechende Frequenz zuteilt.

10. System gemäß einem der vorangehenden Ansprüche, dadurch gekennzeichnet, daß die katadioptrische Vorrichtung von der Ecke eines Reflexionskubus (21) gebildet wird.

11. System gemäß einem der Ansprüche 1 bis 9, dadurch gekennzeichnet, daß die katadioptrische Vorrichtung mittels einer Zeratreuungalinae (58) und eines Rugelspiegels (59) verwirklicht wird.

12. System gemäß einem der vorangehenden Ansprüche, dadurch gekennzeichnet, daß es vor der Ablenkeinrichtung (20B) eine weitere akustooptische Ablenkeinrichtung (20A) aufweist, die mit fester Frequenz ($F_{S0}$) gesteuert wird, um das abgedeckte Feld zu erweitern.

13. Vorrichtung gemäß einem der vorangehenden Ansprüche, dadurch gekennzeichnet, daß die Steuerschaltung (22) der Ablenkeinrichtung (20, 23) einen Sägezahnsignal-Generator (25) aufweist, dessen Ausgabe einen gesteuerten Oszillator (26) steuert, der das Steuersignal für die Ablenkeinrichtung, das in diese über ein dazwischengeschaltetes piezoelektrisches Element (23) eingegeben wird, erzeugt.

14. System gemäß einem der vorangehenden Ansprüche, dadurch gekennzeichnet, daß der Lasersender/Laserempfänger von einem ersten Aufbau und die Retroreflektor- und Modulatoranordnung von einem zweiten Aufbau getragen wird, wobei wenigstens eine der zwei Aufbauten relativ zum anderen beweglich ist, wobei das System ferner eine zweite Katadioptrische Vorrichtung (27) aufweist, um einen Teil der Laserstrahlung durch Retroreflexion ohne Modulation dieser Strahlung zurückzustrahlen, um so Vergleichswerte der durch die relative Bewegung der Aufbauten verursachten Doppler- Frequenzverschiebung zu erhalten.

15. System gemäß einem der vorangehenden Ansprüche, dadurch gekennzeichnet, daß der Empfänger (10) eine optische Mischschaltung für die Erzeugung der Überlagerung der ausgesandten Laserwelle mit der über Retroflexion empfangenen Laserwelle und eine Bearbeitungsschaltung (37) mit einem Spektralanalysator für die Ausführung der Aussonderung der Frequenzverschiebung ($2F_S$), die gleich der doppelten Frequenz des Steuersignals der Ablenkeinrichtung ist, und für die daraus rechnerisch erfolgende Ableitung der Verschiebung ($\theta_B$), die durch die Mittelachse des Laserstrahls in bezug auf die Normale (N) der akustooptische Ablenkeinrichtung (20) gebildet wird, aufweist.

16. System gemäß Anspruch 15, dadurch gekennzeichnet, daß der Empfänger (10) die Aussonderung des Wertes ($2F_S$) der Frequenzverschiebung des empfangenen Laserstrahls bewirkt, wobei diese Aussonderung durch eine Zeitmessung beim Steuern des Oszillators mittels eines periodischen Signals in Form eines symmetrischen Sägezahns erhalten wird.

## Claims

1. A position finding system utilizing a laser beam reflector and modulator device, a laser transmitter-receiver which is mechanically separate and positioned at a distance from a rectroreflector and modulator arrangement, said transmitter producing radiation directed towards the retroreflector and modulator arrangement, said receiver comprising detecting and treatment circuits for the laser radiation which is modulated and returned by retroreflection, characterized in that the said arrangement comprises an acousto-optic deflector (20) which from a control circuit (22) periodically receives an electrical signal (S2) having a regulatable frequency (Fs) in order to produce diffraction of the beam in Bragg operating conditions, said deflector being mechanically coupled with a catadioptric device (21) positioned downstream in order to return the diffracted laser radiation in the same direction and to produce, after an inverse passage through the deflector, the retroreflection of the beam towards the transmitter-receiver, the retroreflected beam having a frequency shift with a value equal to twice ($2F_S$) the frequency of the said control signal.

2. The system as claimed in claim 1, characterized in that it comprises, positioned uptream from the optic deflector device (20) an optic sweep device (30) in order to explore a field with a predetermined extent.

3. The system as claimed in claim 2, characterized in that the sweep device perform an angular exploration in one plane and comprises a reflecting mirror (30) turning about an axis at a right angle to the plane being explored.

4. The system as claimed in claim 3, characterized in that the retroreflector and modulator arrangement (20 and 21) is subjected, in accordance with a predetermined law, to rotation of the mirror (30) in order to maintain such Bragg diffraction conditions.

5. The system as claimed in claim 4, characterized in that the mirror (30) is influenced by a position control means (37, 38 and 39), the detected angular rotation being transmitted to a controlled oscillator (26) which supplies the said control signal (S2) of the deflector (20), the rotation of the mirror being reduced in a device (40) with a ratio which is a function of the said control law in order to entrain the modulator and retroreflector arrangement.

6. The system as claimed in claim 3, characterized in that an optic diverting device, which is controlled in accordance with a predetermined law of the rotation of the mirror (30), is arranged at the entry of the deflector (20) in order to divert the radiation and to maintain the Bragg diffraction conditions.

7. The system as claimed in claim 6, characterized in that the mirror is driven by a position control device (37, 38 and 39), the angular rotation detected by a sensor (39) being transmitted to a controlled oscillator (26), which supplies the said control signal (S2) of the deflector (20), the rotation of the mirror being reduced in a device (40) with a ratio, which is a function of the said control path in order to drive the same optic diverter (41).

8. The system as claimed in any one of the preceding claims 2 through 5, characterized in that the said sweep device is constituted by a turret with two degrees of freedom in order to perform exploration in space involving rotations ($\theta_C$ and $\theta_E$) about two axes at a right angle corresponding to respectively to an is of circular movement and an axis of lift.

9. The system as claimed in claim 8, characterized in that the frequency (FS) applied to the deflector is linked by a predetermined law with the couple of angular rotation values ($\theta_C$ and $\theta_E$), the said control circuit (22) processing the signal at the corresponding frequency as a function of the angular values of rotation detected.

10. The system as claimed in any one of the preceding claims, characterized in that the catadioptric device is constituted by a corner of a reflecting cube (21).

11. The system as claimed in any one of the preceding claims 1 through 9, characterized in that the catadioptric device is constituted by a diverging lens (28) and a spherical mirror (59).

12. The system as claimed in any one of the preceding claims, characterized in that upstream from the deflector (20B) it comprises another acousto-optic deflector device (20A) which is controlled at a fixed frequency ($F_{S0}$) in order to increase the field covered.

13. The system as claimed in any one of the preceding claims, characterized in that the control circuit (22) of the deflector (20 and 23) comprises a saw tooth signal generator (25) whose output signal controls a controlled oscillator (26) which produces the deflector control signal applied to the deflector by the intermediary of a piezo-electricelement (23).

14. The system as claimed in any one of the preceding claims, characterized in that the laser transmitter-receiver is supported by a first structure and the retroreflector and modulator arrangement is supported by a second structure, at least one of the two structures being movable in relation to the other one, said system comprising furthermore a second catadioptric device 27 in order to return part of the laser radiation by retroreflection, without modulating such radiation, in such a manner as to produce a reference for the evaluation of the Doppler frequency shift due to the relative movement of the said structures.

15. The system as claimed in any one of the preceding claims, characterized in that the receiver (10) comprises an optical mixing circuit in order to produce a wave beat of the transmitted laser wave with the laser wave received by retroreflection and a treatment circuit (37) with a spectrum analyser in order to perform the extraction of the frequency shift ($2F_S$) equal to twice the frequency of the control signal of the deflector and in order to deduce from it, by calculation, the deviation ($\theta_B$) presented by the axis of the laser beam in relation to a normal (N) to the acousto-optic deflector (20).

16. The system as claimed in claim 15, characterized in that the receiver (10) performs the extraction of the value ($2F_S$) of the frequency shift of the received laser beam, said extraction being produced by time measurement while driving the oscillator with a signal in the form of a periodic symmetrical saw tooth signal.

# FIG_1

EMETTEUR LASER

1

2

6

3

ENSEMBLE OPTIQUE D'ÉMISSION ET DE RECEPTION

Z

MELANG. OPT.

5

4

10

6

7

8

TRAIT.$^T$

RECEPTEUR

Z

28

27

Z

24

20

21

2θB

θB

N

23

S2(Fs)

25

S1

GENERATEUR SIGNAUX

OSCILLAT.$^R$ CONTROLE

26

22

COMMANDE

DEFLECTEUR

# FIG_2

20

(F)

21

(n)

(F+Fs)

Z

N

θB

θB

N

(F+2Fs)

2θB

λs = V/Fs

23

S2(Fs)

FIG_3_A

FIG_3-B

FIG_4

# FIG_5

DÉMULTIPLICATION

$$\frac{\Delta \theta_B}{\Delta \varphi}$$

$V = f(\Delta \varphi)$

V.C.O

$F_S = f(\Delta \varphi)$

# FIG_6

# FIG_7

20

34

23

# FIG_8

CHAMP ELEMENTAIRE

$f_{S_0}$

$\theta_{EL0}$

$\theta_C$

$\theta_{C_1}$

$\theta_{C0}$

$\theta_{EL1}$

$f_{S_1}$

$\theta_{EL}$

# FIG_9

59

58

20

$\theta_B$

N

$\theta_B$

N

$F_S$

# FIG_10-A

# FIG_10-B

# FIG_11